# EUROPEAN PATENT SPECIFICATION

(11) **EP 3 686 166 B1**
(45) Date of publication and mention of the grant of the patent: **28.02.2024**
(21) Application number: 18857653.2
(22) Date of filing: 20.09.2018
(51) Int. Cl.: C03B 35/16, C03B 25/08, G05B 1/00

(54) **APPARATUS AND METHOD FOR MANUFACTURING GLASS SUBSTRATE**
VORRICHTUNG UND VERFAHREN ZUR HERSTELLUNG EINES GLASSUBSTRATS
DISPOSITIF ET PROCÉDÉ DE FABRICATION D'UN SUBSTRAT EN VERRE

(30) Priority: 20.09.2017 KR 20170120911
(43) Date of publication of application: 29.07.2020
(73) Proprietor: LG Chem, Ltd., Seoul 07336 (KR)
(72) Inventor: LEE, Chang Song, Daejeon 34122 (KR); LEE, Kyu Hwang, Daejeon 34122 (KR); LEE, Kyu Jong, Daejeon 34122 (KR)
(74) Representative: Goddar, Heinz J.
(86) International application number: PCT/KR2018/011091
(87) International publication number: WO 2019/059658

(56) References cited:
- JP-A- H0 753 230
- JP-A- H0 753 230
- JP-A- H11 228 163
- JP-A- 2017 119 584
- KR-A- 20130 099 284
- KR-A- 20170 003 096
- KR-A- 20170 003 096
- KR-B1- 101 230 726

## Description

### Technical Field

The present invention relates to a method and an apparatus for manufacturing a glass substrate, and more particularly, to a method and apparatus for manufacturing a glass substrate for minimizing crack defects in the glass substrate upon performing a slow cooling process of the glass substrate during a glass manufacturing process.

### Background Art

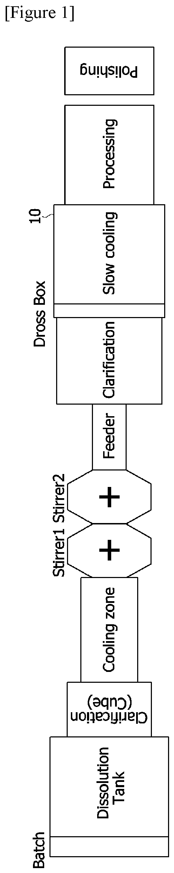

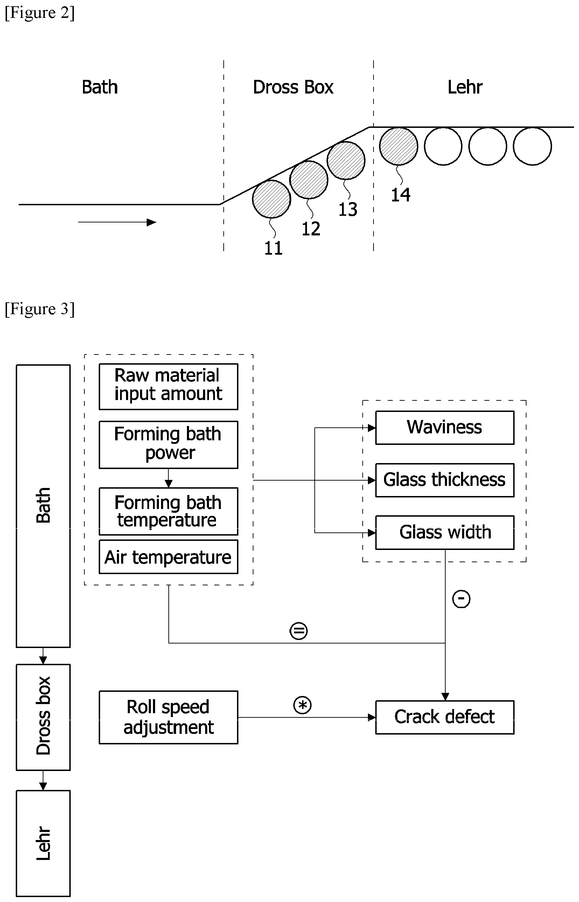

Figures 1 and 2 are schematic diagrams showing an apparatus for manufacturing a glass substrate.

Referring to Figures 1 and 2, an apparatus for manufacturing a glass substrate is used in a manufacturing process of a glass substrate for manufacturing a thin plate glass of about 0.5 mm, and the manufactured glass substrate is used as a material for an optical panel such as a TV and a notebook computer, so that it is very important to control the optical characteristics, physical strength, and the like in the process.

In the glass substrate manufacturing process, a quality issue is a crack defect in the glass substrate. Cracks in the substrate cause glass breakage and optical property deterioration.

JP H07 53230 A discloses, to prevent the generation of fine flaws on glass surfaces occurring due to the deviation between a the moving speed of sheet glass and the circumferential speeds of transporting rollers, a roller group which is divided into plural sections S 1 to Sn. The amts. of the expansion and contraction of roller diameters and the amt. of contraction of the sheet glass are computed for each of the respective sections. The rotating speeds of the rollers are so controlling that the circumferential speeds of the rollers and the moving speed of the sheet glass coincide in accordance with the results thereof.

KR 2017 0003096 A discloses an apparatus for predicting and controlling glass ribbon speed, wherein the apparatus for predicting and controlling glass ribbon speed increases the r-square value of the glass ribbon speed in a real process, thereby increasing moldability and processability of a final glass product.

### Disclosure

### Technical Problem

It is a problem to be solved by the present invention to provide a method and an apparatus for manufacturing a glass substrate capable of deriving causal factors of occurrence of crack defects, and predicting and reducing a crack defect rate, by utilizing data measured in a glass substrate manufacturing process.

### Technical Solution

The above problem is solved in accordance with the subject matter of the independent claims. Further embodiments result form the sub-claims.

To solve the above-described problem, according to one aspect of the present invention, there is provided a method for manufacturing a glass substrate, comprising steps of: cooling a glass substrate transported by a plurality of rolls rotating at a predetermined speed; predicting a crack defect rate of the glass substrate in accordance with a plurality of predictive factors related to crack defects of the glass substrate and rotational speed information of the respective rolls, in the transport process, and adjusting the rotational speed of each roll so that the crack defect rate of the glass substrate is lowered; wherein the plurality of predictive factors include operating conditions of the glass forming process and the width of the glass; the plurality of prediction factors include a raw material input amount, a glass thickness, a forming bath power, a forming bath temperature and an outside air temperature; and the prediction step is performed by estimating a crack defect rate through a partial least squares regression analysis of a plurality of predictive factors and rotational speed information of a plurality of rolls

In addition, according to another aspect of the present invention, there is provided an apparatus for manufacturing a glass substrate, comprising a transport part for cooling a glass substrate transported by a plurality of rolls rotating at a predetermined speed, a prediction part for predicting a crack defect rate of the glass substrate through a partial least squares regression analysis of a plurality of predictive factors related to crack defects of the glass substrate and rotational speed information of the respective rolls, in the transport process, and a control part for controlling the rotation speed of each roll so that the crack defect rate of the glass substrate is lowered; wherein the plurality of predictive factors include operating conditions of the glass forming process and the width of the glass; the plurality of prediction factors include a raw material input amount, a glass thickness, a forming bath power, a forming bath temperature and an outside air temperature; and the prediction step is performed by estimating a crack defect rate through a partial least squares regression analysis of a plurality of predictive factors and rotational speed information of a plurality of rolls.

### Advantageous Effects

As described above, the method and apparatus for manufacturing a glass substrate according to one example of the present invention have the following effects.

Using the data measured in the glass substrate manufacturing process, it is possible to develop a model capable of deriving causal factors of occurrence of crack defects and predicting a crack defect rate.

Also, based on this model, the rotational speed of each roll of a dross box can be adjusted to reduce the crack defect rate.

### Brief Description of Drawings

Figures 1 and 2 are schematic diagrams showing an apparatus for manufacturing a glass substrate.
Figure 3 is a configuration diagram showing predictive factors for modeling crack defect rates.
Figure 4 is graphs showing crack defect rates predicted through a crack defect rate prediction model and actually measured crack defect rates.
Figure 5 is graphs showing the relationship between the rotational speed offset of each roll and the crack defect rate.

### Mode for Invention

Hereinafter, a method and an apparatus for manufacturing a glass substrate according to one example of the present invention will be described in detail with reference to the accompanying drawings.

In addition, the same or similar reference numerals are given to the same or corresponding components regardless of reference numerals, of which redundant explanations will be omitted, and for convenience of explanation, the size and shape of each constituent member as shown may be exaggerated or reduced.

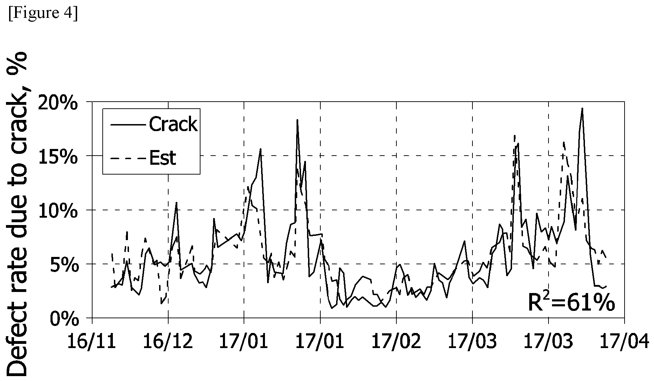

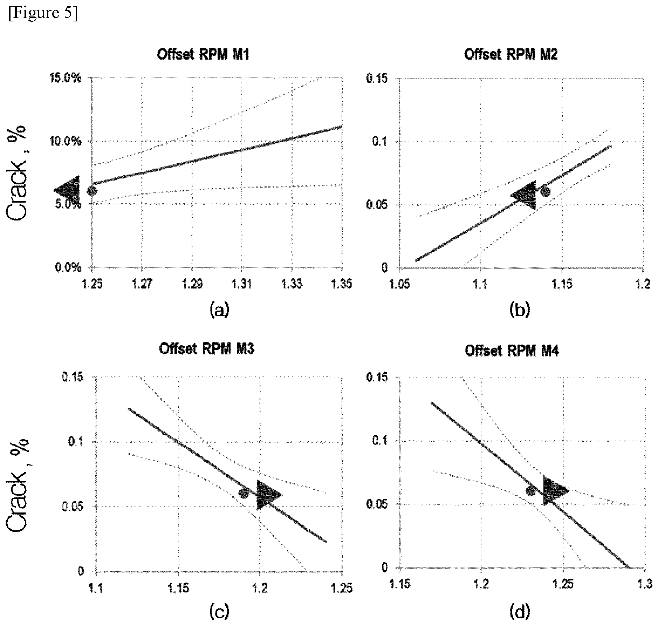

Figure 3 is a configuration diagram showing predictive factors for modeling crack defect rates, Figure 4 is graphs showing crack defect rates predicted through a crack defect rate prediction model and actually measured crack defect rates, and Figure 5 is graphs showing the relationship between the rotational speed offset of each roll and the crack defect rate.

An apparatus for manufacturing a glass substrate related to one example of the present invention comprises a transport part for cooling a glass substrate transported by a plurality of rolls rotating at a predetermined speed, a prediction part for predicting a crack defect rate of the glass substrate through a partial least squares regression analysis of a plurality of predictive factors related to crack defects of the glass substrate and rotational speed information of the respective rolls, in the transport process, and a control part for controlling the rotation speed of each roll so that the crack defect rate of the glass substrate is lowered; wherein the plurality of predictive factors include operating conditions of the glass forming process and the width of the glass; the plurality of prediction factors include a raw material input amount, a glass thickness, a forming bath power, a forming bath temperature and an outside air temperature; and the prediction step is performed by estimating a crack defect rate through a partial least squares regression analysis of a plurality of predictive factors and rotational speed information of a plurality of rolls

Referring to Figure 1, the glass substrate manufacturing apparatus comprises a slow cooling device (10). Referring to Figure 2 and explaining the glass forming and slow cooling device (10), it comprises a bath, a dross box and a lehr. At this time, the transport part comprises a plurality of rolls (11, 12, 13, 14), and the plurality of rolls are located on the dross box side, in particular. The plurality of rolls transport the glass substrate, and in the transport process, the cooling (slow cooling) of the glass substrate is performed.

On the other hand, during slow cooling, cracks may occur in the glass substrate. In particular, the rotational speed of each of the rolls (11, 12, 13, 14) must be optimized in accordance with the transport speed of the glass substrate. If the transport speed of the glass substrate and the rotational speed of the rolls are not optimized, a crack is generated in the glass substrate due to friction between the glass substrate and the rolls (11, 12, 13, 14). That is, the rotational speed of the rolls must be adjusted so that any offset does not occur therein so as to be optimized to the transport speed of the glass substrate.

A method for manufacturing a glass substrate related to one example of the present invention comprises steps of: cooling a glass substrate transported by a plurality of rolls rotating at a predetermined speed (hereinafter, cooling step); predicting a crack defect rate of the glass substrate in accordance with a plurality of predictive factors related to crack defects of the glass substrate and rotational speed information of the respective rolls, in the transport process (hereinafter, prediction step), and adjusting the rotational speed of each roll so that the crack defect rate of the glass substrate is lowered (hereinafter, adjustment step).

Referring to Figure 3, the plurality of predictive factors include operating conditions of the glass forming process and the width of the glass, and statistical modeling by multivariate technique is possible with predictive factors and rotational speed information of each roll. The plurality of predictive factors include a raw material input amount, a glass thickness, a forming bath power, a forming bath temperature and an outside air temperature. However, a number of predictive factors (operating conditions, glass width, etc.) are conditions that are difficult to change in order to reduce the crack defect rate. However, it is possible to predict and reduce the crack defect rate through optimization of the respective rolls (11, 12, 13, 14). Therefore, the predictive factors may be reference factors, and the rotational speed information of each roll may correspond to an optimization factor.

At this time, the prediction step is performed by estimating a crack defect rate through a partial least squares regression analysis of a plurality of predictive factors and rotational speed information of a plurality of rolls.

Referring to Figure 4, it is possible to develop a predictive model that can account for about 61% through the partial least squares regression analysis based on the plurality of predictive factors.

Also, the rotational speed information of the rolls (11, 12, 13, 14) may be an offset of the rotational speed of each of the rolls for the transport speed of the glass substrate. Therefore, the rotational speed of each roll can be adjusted so as to reduce the offset.

Furthermore, the prediction step and the adjustment step can be performed in real time.

Referring to Figure 5, roll rotation speeds and optimum directions of four rolls (11, 12, 13, 14) at a specific operation time can be presented through the analysis model. In Figure 5, M1 denotes the roll of Reference No. 11, M2 denotes the roll of Reference No. 12, M3 denotes the roll of Reference No. 13, and M4 denotes the roll of Reference No. 14.

In addition, the blue solid line represents the sensitivity function of the roll speed at a specific operation time, and the blue dotted line represents the confidence interval. Furthermore, the red dot is the roll rotation speed at the relevant time, and shows which direction (roll speed increase/decrease) should be adjusted to minimize the crack defect rate.

For example, referring to (a) and (b) in Figure 5, they correspond to the case where the speed of the roll is faster than the transport speed of the glass substrate, so that the rotational speed of the relevant roll must be reduced. Alternatively, referring to (c) and (d) in Figure 5, they correspond to the case where the speed of the roll is slower than the transport speed of the glass substrate, so that the rotational speed of the relevant roll must be increased.

### Industrial Applicability

According to the method and apparatus for manufacturing a glass substrate related to one example of the present invention, using the data measured in the glass substrate manufacturing process, it is possible to develop a model capable of deriving causal factors of occurrence of crack defects and predicting a crack defect rate.

## Claims

1. A method for manufacturing a glass substrate, comprising steps of:
cooling a glass substrate transported by a plurality of rolls (11, 12, 13, 14)rotating at a predetermined speed;
predicting a crack defect rate of the glass substrate in accordance with a plurality of predictive factors related to crack defects of the glass substrate and rotational speed information of the respective rolls, in the transport process; and
adjusting the rotational speed of each roll so that the crack defect rate of the glass substrate is lowered;
wherein the plurality of predictive factors include operating conditions of the glass forming process and the width of the glass;
the plurality of prediction factors include a raw material input amount, a glass thickness, a forming bath power, a forming bath temperature and an outside air temperature; and the prediction step is performed by estimating a crack defect rate through a partial least squares regression analysis of a plurality of predictive factors and rotational speed information of a plurality of rolls (11, 12, 13, 14).

2. The method for manufacturing a glass substrate according to claim 1,
wherein the rotational speed information of the rolls is an offset of a rotational speed of each of the rolls for the transport speed of the glass substrate.

3. The method for manufacturing a glass substrate according to claim 1,
wherein the prediction step and the adjustment step are performed in real time.

4. An apparatus for manufacturing a glass substrate, comprising:
a transport part for cooling a glass substrate transported by a plurality of rolls (11, 12, 13, 14) rotating at a predetermined speed;
a prediction part for predicting a crack defect rate of the glass substrate through a partial least squares regression analysis of a plurality of predictive factors related to crack defects of the glass substrate and rotational speed information of the respective rolls, in the transport process; and
a control part for controlling the rotation speed of each roll so that the crack defect rate of the glass substrate is lowered;
wherein the plurality of predictive factors include operating conditions of the glass forming process and the width of the glass;
the plurality of prediction factors include a raw material input amount, a glass thickness, a forming bath power, a forming bath temperature and an outside air temperature; and
the prediction step is performed by estimating a crack defect rate through a partial least squares regression analysis of a plurality of predictive factors and rotational speed information of a plurality of rolls (11, 12, 13, 14).

## Patentansprüche

1. Verfahren zur Herstellung eines Glassubstrats, das die folgenden Schritte umfasst:
Kühlen eines Glassubstrats, das durch eine Mehrzahl von Walzen (11, 12, 13, 14) transportiert wird, die sich mit einer vorbestimmten Geschwindigkeit drehen;
Vorhersagen einer Rissdefektrate des Glassubstrats in Übereinstimmung mit einer Mehrzahl von Vorhersagefaktoren, die sich auf Rissdefekte des Glassubstrats und Drehzahlinformationen der jeweiligen Walzen im Transportprozess beziehen; und
Einstellen der Drehzahl jeder Walze, so dass die Rissdefektrate des Glassubstrats gesenkt wird;
wobei die Mehrzahl von Vorhersagefaktoren Betriebsbedingungen des Glasformungsprozesses und die Breite des Glases umfasst;
die Mehrzahl von Vorhersagefaktoren eine Rohmaterialeingangsmenge, eine Glasdicke, eine Formungsbadleistung, eine Formungsbadtemperatur und eine Außenlufttemperatur umfasst; und der Vorhersageschritt durch Schätzen einer Rissdefektrate durch eine partielle Regressionsanalyse der kleinsten Quadrate einer Mehrzahl von Vorhersagefaktoren und Drehzahlinformationen einer Mehrzahl von Walzen (11, 12, 13, 14) durchgeführt wird.

2. Verfahren zur Herstellung eines Glassubstrats nach Anspruch 1,
wobei die Drehzahlinformationen der Walzen ein Versatz einer Drehzahl jeder der Walzen für die Transportgeschwindigkeit des Glassubstrats sind.

3. Verfahren zur Herstellung eines Glassubstrats nach Anspruch 1,
wobei der Vorhersageschritt und der Einstellschritt in Echtzeit durchgeführt werden.

4. Vorrichtung zur Herstellung eines Glassubstrats, die umfasst:
einen Transportteil zum Kühlen eines Glassubstrats, das durch eine Mehrzahl von Walzen (11, 12, 13, 14) transportiert wird, die sich mit einer vorbestimmten Geschwindigkeit drehen;
einen Vorhersageteil zum Vorhersagen einer Rissdefektrate des Glassubstrats durch eine partielle Regressionsanalyse der kleinsten Quadrate einer Mehrzahl von Vorhersagefaktoren, die sich auf Rissdefekte des Glassubstrats und Drehzahlinformationen der jeweiligen Walzen im Transportprozess beziehen; und
einen Steuerteil zum Steuern der Drehzahl jeder Walze, so dass die Rissdefektrate des Glassubstrats gesenkt wird;
wobei die Mehrzahl von Vorhersagefaktoren Betriebsbedingungen des Glasformungsprozesses und die Breite des Glases umfasst;
die Mehrzahl von Vorhersagefaktoren eine Rohmaterialeingangsmenge, eine Glasdicke, eine Formungsbadleistung, eine Formungsbadtemperatur und eine Außenlufttemperatur umfasst; und
der Vorhersageschritt durch Schätzen einer Rissdefektrate durch eine partielle Regressionsanalyse der kleinsten Quadrate einer Mehrzahl von Vorhersagefaktoren und Drehzahlinformationen einer Mehrzahl von Walzen (11, 12, 13, 14) durchgeführt wird.

## Revendications

1. Procédé de fabrication d'un substrat en verre, comprenant les étapes consistant à : refroidir un substrat en verre transporté par une pluralité de rouleaux (11, 12, 13, 14) tournant à une vitesse prédéterminée ;
prédire un taux de défauts de formation de fissures du substrat en verre en fonction d'une pluralité de facteurs prédictifs liés aux défauts de formation de fissures du substrat en verre et aux informations sur la vitesse de rotation des rouleaux respectifs, dans le processus de transport ; et
ajuster la vitesse de rotation de chaque rouleau de manière à réduire le taux de défauts de formation de fissures du substrat en verre ;
dans lequel la pluralité de facteurs prédictifs inclus les conditions de fonctionnement du processus de formage du verre et la largeur du verre ;
la pluralité de facteurs prédictifs inclus une quantité d'apport de matières premières, une épaisseur de verre, une puissance de bain de formage et une température de l'air extérieur ; et l'étape de prédiction est réalisée en estimant un taux de défauts de formation de fissures par une analyse de régression par moindres carrés partiels d'une pluralité de facteurs prédictifs et d'informations sur la vitesse de rotation d'une pluralité de rouleaux (11, 12, 13, 14).

2. Procédé de fabrication d'un substrat en verre selon la revendication 1, dans lequel les informations sur la vitesse de rotation des rouleaux sont un décalage de la vitesse de rotation de chacun des rouleaux par rapport à la vitesse de transport du substrat en verre.

3. Procédé de fabrication d'un substrat en verre selon la revendication 1, dans lequel l'étape de prédiction et l'étape d'ajustement sont réalisées en temps réel.

4. Appareil pour la fabrication d'un substrat en verre, comprenant :
une partie de transport pour refroidir un substrat en verre transporté par une pluralité de rouleaux (11, 12, 13, 14) tournant à une vitesse prédéterminée ;
une partie prédictive pour prédire un taux de défauts de formation de fissures du substrat en verre par une analyse de régression partielle des moindres carrés d'une pluralité de facteurs prédictifs liés aux défauts de formation de fissures du substrat en verre et aux informations sur la vitesse de rotation des rouleaux respectifs, au cours du processus de transport ; et
une partie de commande pour commander la vitesse de rotation de chaque rouleau afin de réduire le taux de défauts de formation de fissures du substrat en verre ;
dans lequel la pluralité de facteurs prédictifs comprend les conditions de fonctionnement prédictives du processus de formation du verre et la largeur du verre ;
la pluralité de facteurs prédictifs inclus une quantité d'apport de matières premières, une épaisseur de verre, une puissance de bain de formage, une température de bain de formage et une température de l'air extérieur ; et
l'étape de prédiction est réalisée en estimant un taux de défauts de formation de fissures par une analyse de régression par moindres carrés partiels d'une pluralité de facteurs prédictifs et d'informations sur la vitesse de rotation d'une pluralité de rouleaux (11, 12, 13, 14).
